# EUROPÄISCHE PATENTSCHRIFT

(11) **EP 2 454 176 B1**
(45) Veröffentlichungstag und Bekanntmachung des Hinweises auf die Patenterteilung: **01.05.2013**
(21) Anmeldenummer: 10734039.0
(22) Anmeldetag: 06.07.2010
(51) Int. Cl.: B65G 1/04, B65G 1/137

(54) **VERFAHREN UND LAGERSYSTEM ZUM LAGERN UND KOMMISSIONIEREN VON ARTIKELN**
METHOD AND STORAGE SYSTEM FOR STORING AND ORDER-PICKING ARTICLES
PROCÉDÉ ET SYSTÈME DE STOCKAGE POUR STOCKER ET PRÉPARER DES COMMANDES D'ARTICLES

(30) Priorität: 17.07.2009 DE 102009033697
(43) Veröffentlichungstag der Anmeldung: 23.05.2012
(73) Patentinhaber: Knapp AG, 8075 Hart bei Graz (AT)
(72) Erfinder: KÖRNER, Erik, A-8010 GRAZ (AT)
(74) Vertreter: Hanke, Hilmar
(86) Internationale Anmeldenummer: PCT/EP2010/004070
(87) Internationale Veröffentlichungsnummer: WO 2011/006598

(56) Entgegenhaltungen:
- DE-B4- 10 313 577
- US-A1- 2005 035 138

## Beschreibung

Die Erfindung betrifft ein Verfahren und ein Lagersystem zum Lagern und Kommissionieren von Artikeln in Form von Einzelartikeln und/oder Packungseinheiten in einem Lagersystem bestehend aus
- einem Palettenregallager zur Lagerung von auf Wareneingangs-Ladungsträgern angelieferten Artikeln,
- einer Einrichtung zur Depalletierung, Vereinzelung und Umlagerung von Artikeln von Eingangs- Ladungsträgern auf Transport-Ladungsträger,
- einem Regallager zur Lagerung vereinzelter Artikel als Zwischenpuffer vor der Kommissionierung,
- zumindest einer Kommissionierstation, in der Artikel auf einen Ziel-Ladungsträger geladen werden, und
- einer Fördertechnik zum Transport von vereinzelten Artikeln zum Regallager und vom Regallager zur Kommissionierstation, wobei Transport-Ladungsträger für den Transport von vereinzelten Artikeln auf der Fördertechnik verwendet werden.

Aus DE 103 13 577 B4 ist ein Lagersystem der vorgenannten Art bekannt. Das bekannte Lagersystem umfasst eingangsseitig ein Palettenregallager, in das angelieferte mit Packungseinheiten bestückte Paletten eingelagert werden, anschließend eine Einrichtung zur Vereinzelung von angelieferten Packungseinheiten und zum Umlagern von den Paletten auf Tablare, und wiederum anschließend ein Regallager, zu dem die vereinzelten Packungseinheiten auf den Tablaren gefördert und auf den Tablaren eingelagert werden, bevor die Packungseinheiten auf den Tablaren kommissioniert, insbesondere mittels einer Entnahme-Fördertechnik für die Beladung auf Auftrags-Ladungsträger bereit gestellt und auf die Auftrags-Ladungsträger in einer definierten Beladesequenz beladen und versandt werden. Von Nachteil ist der große Aufwand an Tablaren, die in der Regel plane Unterlagen für die Packungseinheiten in Form von Tabletts mit oder ohne Durchbrüche sind.

Ausgehend vom vorgenannten Stand der Technik ist es Aufgabe der Erfindung, ein Verfahren nebst Lagersystem zum Lagern und Kommissionieren von Artikeln in Form von Einzelartikeln und/oder Packungseinheiten bereitzustellen, bei dem mit einfachen Mitteln die Lagerdichte des Regallagers erhöht und gegebenenfalls ein großes Artikelspektrum automatisch eingelagert und für eine Kommissionierung ausgelagert werden kann, wobei selbst große Artikelmengen effektiv kommissioniert werden können.

Gelöst wird die Aufgabe durch ein Verfahren mit den Merkmalen nach Anspruch 1 sowie durch ein Lagersystem mit den Merkmalen nach Anspruch 2, vorteilhaft weitergebildet durch die Merkmale nach den Ansprüchen 3 bis 14.

Wesen der Erfindung ist, dass bei einem Verfahren und Lagersystem der eingangs genannten Art vereinzelte Artikel im Regallager ohne Transport-Ladungsträger gelagert werden.

Das Lagersystem besitzt insbesondere Transport-Ladungsträger mit einer oberseitigen Profilierung, welche geradlinige oben offenen Nuten sind.

Im besonderen ist der Transport-Ladungsträger flach und ohne Durchgänge ausgebildet und besitzt vorzugsweise einen oberen Umfangsrand.

Die Einrichtung zur Depalletierung, Vereinzelung und Umlagerung von Artikeln von Eingangs- Ladungsträgern auf Transport-Ladungsträger weist eine Umsetzeinrichtung mit einer höhenverstellbaren Lastaufnahme auf, deren parallele Zinken in einer oberen Stellung einen vereinzelten Artikel einerseits übernehmen können und in einer unteren Stellung in die oberseitige Profilierung eines angeförderten positionierten leeren Transport-Ladungsträgers andererseits einbringbar sind, wobei ein auf den Zinken nach unten bewegter Artikel auf dem positionierten Transport-Ladungsträger abstellbar und der Transport-Ladungsträger nebst Artikel zum Regallager abförderbar ist.

Das Regallager weist profilierte Fachböden auf und besitzt ein verfahrbares Regalbediengerät mit einem höhenverstellbaren ausfahrbaren und/oder teleskopierbaren Lastaufnahmemittel, dessen verstellbare Zinken einerseits in die profilierten Fachböden für ein Ein- und Auslagern von vereinzelten Artikeln in das und aus dem Regallager einbringbar und andererseits in die oberseitige Profilierung eines angeförderten positionierten Transport-Ladungsträger einbringbar sind, um vereinzelte Artikel vom Transport-Ladungsträger auf das Lastaufnahmemittel oder umgekehrt vom Lastaufnahmemittel zum Transport-Ladungsträger zu übergeben.

Vorzugsweise weist das Lastaufnahmemittel des Regalbediengeräts Zinken auf, die beidseits des Lastaufnahmemittels ausfahrbar sind, um in einer Regalgasse ein Doppelregal bedienen zu können und voneinander unabhängige Förderwege für einen An- und Abtransport von Artikeln in das bzw. aus dem Regallager einzurichten.

Besonders zweckmäßig ist, wenn der Artikel in dichter seitlicher Nachbarschaft zu einem anderen Artikel auf dem profilierten Fachboden des Regalagers platziert wird, wobei bei einem Lastaufnahmemittel nur eine Gruppe von Zinken entsprechend der Breite eines ein- oder auszulagernden Artikels ausgefahren wird. Dadurch lässt sich eine noch größere Lagerdichte in einem Regallager einrichten.

Für den Transport von Artikeln auf Paletten zu und von dem Palettenregallager ist eine Palettentransport-Fördertechnik und für den Transport von vereinzelten Artikeln auf den Transport-Ladungsträgern sowie von leeren Transport- Ladungsträgern eine Transport-Ladungsträger-Fördertechnik vorgesehen.

Ferner ist zumindest eine Kommissionierstation zum Kommissionieren von Artikeln von einer Palette sowie von vereinzelten Artikeln von Transport-Ladungsträgern auf Ziel-Ladungsträger vorgesehen, die jeweils einem Kommissionierauftrag entsprechen.

Der Ziel-Ladungsträger kann ein angeförderter Versand-Ladungsträger eines entsprechenden Kommissionierauftrags sein, der nach einem Beladen in der Kommissionierstation zum Warenausgangsbereich förderbar ist.

Auch kann eine Sortiereinrichtung zur Erstellung einer Sequenz von Paletten und Transport-Ladungsträgern zur sequenzierten Bereitstellung von Artikeln in der Kommissionierstation vorgesehen sein.

Insbesondere kann ein zum Regallager parallel geschaltetes Palettenregallager in Voranordnung zur Kommissionierstation vorgesehen sein, aus dem Artikel auf Paletten auslagerbar und zur Kommissionierstation förderbar sind.

Das Lagersystem gemäß der Erfindung kann eine Entscheidungsstation besitzen, in der die Entscheidung getroffen wird, ob die auf Eingangs-Ladungsträgern angelieferten identifizierten Artikel in das Palettenregallager oder in das Regallager eingelagert werden sollen.

Das Kriterium der Entscheidung in der Entscheidungstation ist vorzugsweise die Umschlagshäufigkeit des kommissionierten Artikels und der Lagerbestand des Artikels im Regallager, wobei im Falle der maximalen Kapazitätsauslastung des Regallagers Artikel vorübergehend im Palettenregallager auf Paletten zwischengelagert und nach Freiwerden von Lagerkapazität im Regallager nach Depalletierung vereinzelt in das Regallager umgelagert werden.

Das erfindungsgemäße Lager- und Kommissioniersystem eignet sich besonders für den Lebensmittelhandel, mit dessen Hilfe die Filialen einer Supermarktkette beliefert werden können.

Das Lagersystem ermöglicht das Lagern und Kommissionieren von Artikeln, die auf Wareneingangs-Ladungsträgern, vorzugsweise auf Paletten, angeliefert und auf Ziel-Ladungsträgern, vorzugsweise Rollcontainer oder Paletten, versandt werden.

Im Lagersystem werden - nach einer Vorauswahl - die auf Wareneingangs-Ladungsträgern angelieferten Artikel vereinzelt, danach auf Transport- Ladungsträgern zum Regallager, vorzugsweise Hochregal, transportiert und am profilierten Lagerort des Regallager ohne Ladungsträger, d.h. tablarlos, eingelagert.

Für eine Kommissionierung wird nach der Entnahme vom profilierten Lagerort der Artikel tablarlos ausgelagert, danach auf einen Transport-Ladungsträger aufgegeben und zum Kommissionierbereich transportiert.

Im Kommissionierbereich werden die Artikel von den Transport-Ladungsträgern auf ausgewählte Ziel-Ladungsträger manuell oder maschinell direkt übergeben, oder auf Hilfs-Ladungsträger vorzugsweise mit höhenverstellbarem Boden übergeben, bevor sie anschließend vorzugsweise automatisch in einer separaten Beladestation im Bereich des Warenausgangs auf Ziel- Ladungsträger übergeben werden.

Im System ist der Transport-Ladungsträger nur Transporthilfsmittel zum automatischen Transport von Ware auf einer Transport-Fördertechnik. Der Transport-Ladungsträger wird jedoch nicht zur Lagerung der Ware am Lagerort verwendet, wodurch sich das System von bekannten Systemen unterscheidet.

Wesentlicher Vorteil der Erfindung ist, dass durch den Verzicht auf Ladungsträger während der Lagerung von Artikeln am Lagerort des Regallagers die Anzahl von Ladungsträgern zum Handhaben der Artikel deutlich reduziert werden kann. Es entfallen mithin sämtliche Tablare, die im als Tablarlager ausgebildeten Regallager nach dem eingangs genannten Stand der Technik notwendig sind.

Vorzugsweise verbleiben die Ladungsträger nach einem Entladen des Artikels am Einlagerungsort des Regallagers in der Vorzone des Regallagers und werden auf kurzem Weg zum Auslagerungsort des Regallagers transportiert, wo die leeren Ladungsträger wieder für eine Aufnahme von ausgelagerten tablarlosen Artikeln bereitstehen, bevor die ausgewählten zu kommissionierenden Artikel auf den (Transport-)Ladungsträgern zur Kommissionierstation gefördert werden.

Weiterer wesentlicher Vorteil der Erfindung ist die große Lagerdichte im Regallager, die sich durch den Verzicht auf Ladungsträger beim Lagern ergibt, da die Stellflächen des Regallagers nicht auf die Abmaße des Ladungsträgers angepasst werden müssen, sondern die Dimensionen des Artikels die Größe des Lagerorts bestimmen.

Vorteilhaft weiterhin ist, dass durch die Unterfahrtechnik beim Beladen/Entnehmen des Ladungsträgers bei Verwendung eines Regallagers mit profiliertem Fachboden ein größeres Artikelspektrum unterschiedlichster Konfiguration, wie etwa Säcke mit Futtermitteln, gehandhabt werden kann. Es kann ein großes Artikelspektrum automatisch eingelagert und für eine Kommissionierung ausgelagert werden, wobei selbst große Artikelmengen effektiv kommissionierbar sind, da auch das Palettenregallager für eine direkte Kommissionierung zur Verfügung steht. Nach dem eingangs genannten Stand der Technik steht das Palettenregallager nicht direkt für eine Kommissionierung zur Verfügung.

Weitere Vorteile und Einzelheiten der Erfindung werden nachfolgend anhand von Ausführungsbeispielen unter Bezugnahme auf die beigefügten Zeichnungen näher beschrieben; es zeigen:
- Figur 1: ein Lagersystem in Form eins Warenumschlaglagers in schematischer Draufsicht,
- Figur 2: wesentliche Verfahrensschritte des Lagersystems,
- Figur 3: einen Transport-Ladungsträger des Lagersystems in perspektivischer Ansicht,
- Figur 4: eine Umsetzeinrichtung des Lagersystems in perspektivischer Ansicht,
- Figur 5: ein Regallager des Lagersystems mit Regalbediengerät und Vorzone für ein Ein- und Auslagern von Artikeln,
- Figur 6: Steuerungselemente für ein Kommissionieren von Artikel im Lagersystem,
- Figur 7: das Regalbediengerät mit einem Lastaufnahmemittel in vier Einzelvarianten, und
- Figur 8: das Lagerregal mit Regalbediengerät in vier Varianten mit Darstellung einer Ein- und Auslagerung von Artikeln.

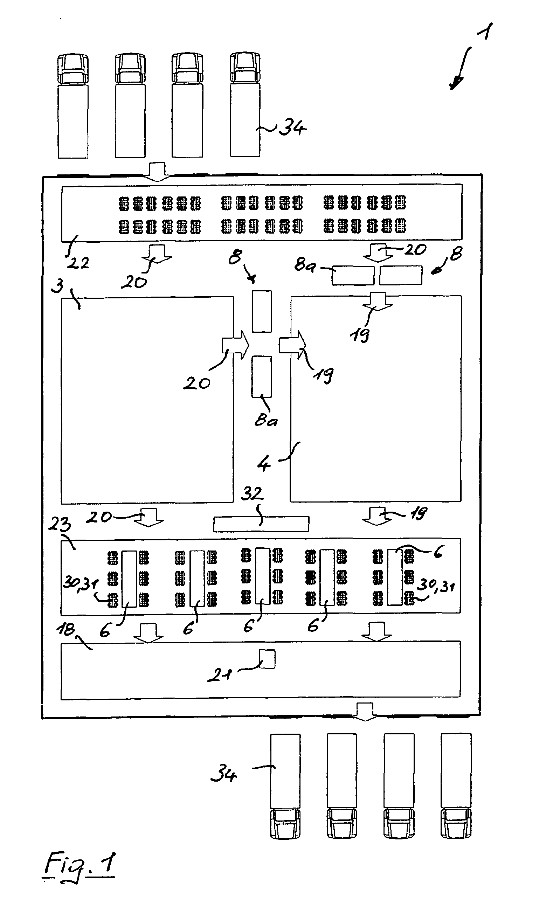

In Figur 1 sind wesentliche Elemente eines Lagersystems 1 in Form eines Warenumschlaglagers schematisch dargestellt.

Das Lagersystem gemäß Figur 1 umfasst:
- Ein Regallager 3 für Paletten, in dem Artikel die auf Wareneingangs-Ladungsträgern angelieferten Artikel in einem Hochregal auf Paletten zwischengelagert werden. Zur Ein- und Auslagerung wird ein Regalbediengerät verwendet.
- Ein Regallager 4 für die Lagerung vereinzelter Artikel 2 ohne Ladungsträger in einem Hochregal. Zur Ein- und Auslagerung wird ein Regalbediengerät verwendet.
- Eine Einrichtung 8 zur Depalettierung, Vereinzelung und Umlagerung von Artikeln von Wareneingangs-Ladungsträgern auf Transport-Ladungsträger 7.
- Kommissionierstationen 6 in einem Kommissionierbereich 23 zur Kommissionierung von Artikeln von einer Palette oder Transport-Ladungsträgern 7 auf einen Ziel-Ladungsträger oder Hilfs-Ladungsträger.
- Eine Transport-Fördertechnik 20 für den Transport von Paletten und eine Transport-Fördertechnik 19 für den Transport von vereinzelten Artikeln auf Transport-Ladungsträgern 7.

Das Lagersystem zeichnet sich dadurch aus, dass zum Transport von.vereinzelten Artikeln 2 auf der Transport-Fördertechnik 19 ein Transport-Ladungsträger 7 verwendet wird, der eine oberseitige Profilierung 11 aufweist, um Artikel 2 mit einer Umsetzeinrichtung 9 auf den Transport-Ladungsträger 7 aufgeben zu können.

Entsprechend weist auch das Regallager 4 zur tablarlosen Lagerung von Artikeln Fachböden 13 mit einem oberseitigen Profil auf, um Artikel 2 mittels eines besonderen Regalbediengeräts, dessen Lastaufnahmemittel verstellbare Zinken besitzt, auf- und abgeben zu können.

Im Rahmen der Beschreibung stehen Artikel für Einzelartikel oder Handhabungs- bzw. Packungseinheiten (Colli, etc.).

Das Lagersystem 1 gemäß Figur 1 besteht aus einem Wareneingangsbereich 22, Lagerbereichen in Form eines Palettenregallagers 3 und eines Regallagers 4, einem Kommissionierbereich 23 mit fünf Kommissionierstationen 6 und einem Warenausgangsbereich 18.

Die von einem Kraftfahrzeug 34 oder Bahn auf Wareneingangs-Ladungsträgern angelieferten Artikel werden im Wareneingangsbereich 22 durch ein Lagerverwaltungssystem erfasst.

Nach der Erfassung im Wareneingangsbereich wird einem Artikel ein Lagerort entweder im Palettenregallager 3 oder Regallager 4 durch das Lagerverwaltungssystem zugewiesen.

Im Palettenregallager 3 werden die Artikel auf dem Wareneingangs-Ladungsträger in Form von Paletten gelagert, die bevorzugt die Wareneingangs-Ladungsträger sind.

Im Regallager 4 werden die Artikel 2 einzeln, ohne Ladungsträger, gelagert.

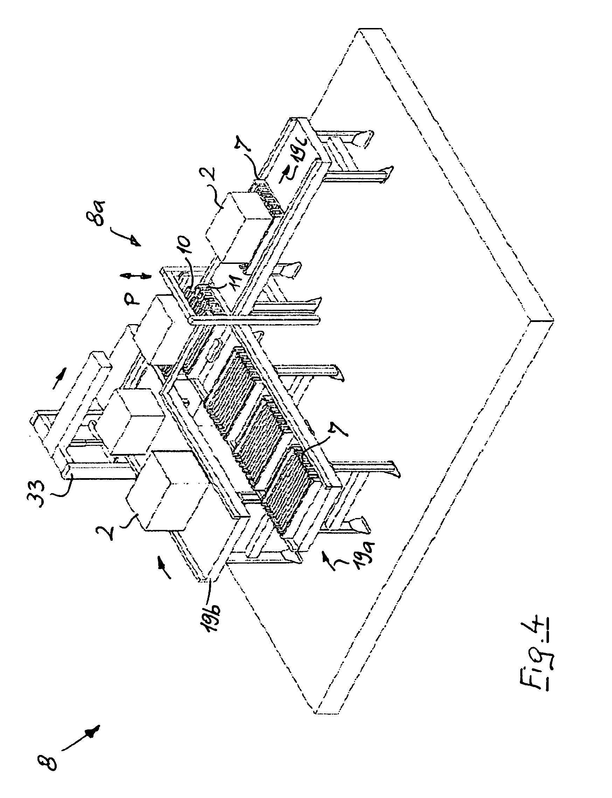

Zum Beladen von Transport-Ladungsträgern 7 dient eine Umsetzeinrichtung 8 gemäß Figur 4.

Im Kommissionierbereich 23 werden die Artikel 2 gemäss Kommissionieraufträgen auf Ziel-Ladungsträger in Kommissionierstationen 6 umgelagert. Dazu werden die Artikel durch das Lagerverwaltungssystem vom Lagerbereich des Palettenregallagers 3 und Regallager 4 angefordert und zum Kommissionierbereich 23 transportiert.

Im Warenausgangsbereich 18 werden die Ziel-Ladungsträger auf einzelne Versandrampen aufgeteilt und verladen.

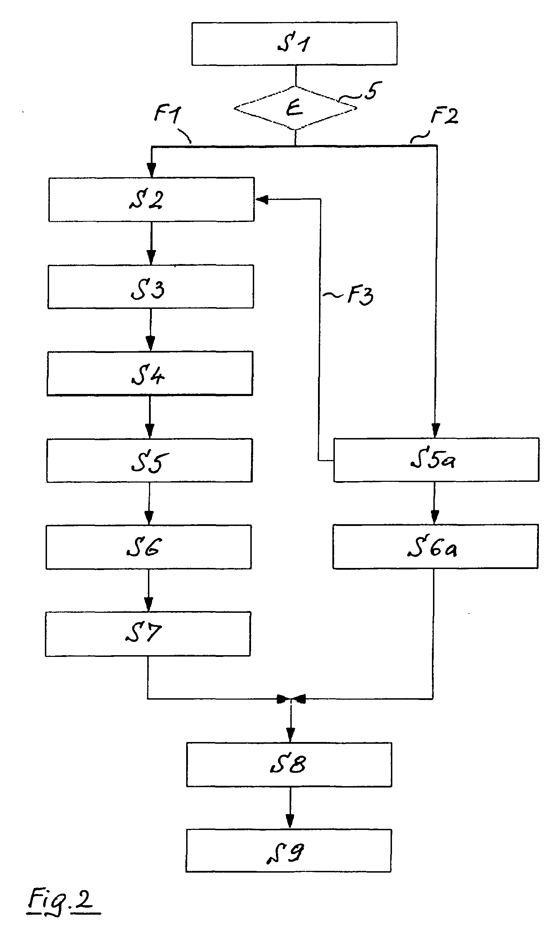

In Figur 2 sind die wesentlichen Verfahrensschritte im Lager- und Kommissioniersystem von der Anlieferung von Artikeln bis zur Auslieferung der Artikel gezeigt, wobei

| | |
|---|---|
| S1 | = Warenanlieferung auf Wareneingangs-Ladungsträgern |
| E | = Entscheidung in der Entscheidungsstation 5 |
| S2 | = Depalettierung/Vereinzelung |
| S3 | = Beladen von Transport-Ladungsträgern |
| S4 | = Transport zum Regallager mit Hilfe von Transport-Ladungsträgern |
| S5 | = Einlagerung im Regallager |
| S5a | = Einlagerung im Palettenregallager |
| S6 | = Auslagerung aus Regallager |
| S6a | = Auslagerung aus Palettenregallager |
| S7 | = Transport zum Kommissionierbereich mit Hilfe von Transport-Ladungsträgern |
| S8 | = Beladen von Ziel-Ladungsträgern |
| S9 | = Warenauslieferung auf Ziel-Ladungsträgern |

In einem ersten Schritt S1 werden Artikel mit einem Kraftfahrzeug 34 oder der Bahn auf Wareneingangs-Ladungsträgern im Warenumschlaglager bzw. Regalsystem 1 angeliefert.

Die Artikel werden daraufhin mit Hilfe eines Lagerverwaltungssystems vereinnahmt und entweder im Palettenregallager 3 oder Regallager 4 eingelagert.

Die Entscheidung E, ob Artikel im Palettenregallager 3 oder dem Regallager 4 eingelagert werden, ist von der Umschlagshäufigkeit des Artikels und dem Lagerbestand des Artikels im Regallager 4 abhängig. Artikel mit einer hohen Umschlaghäufigkeit (Schnelldreher, d.h. Artikel, die pro Zeiteinheit in großen Mengen umgeschlagen werden) werden im Palettenregallager 3 gelagert, während Artikel mit geringerer Umschlaghäufigkeit (Langsamdreher) im Regallager 4 eingelagert werden.

Im Falle, dass der Lagerbestand eines Artikel mit geringer Umschlaghäufigkeit eine obere Grenze überschritten hat, wird der Artikel im Palettenregallager 3 eingelagert. Erreicht der Lagerbestand eines Artikels mit geringer Umschlaghäufigkeit einen unteren Grenzwert, wird ein Nachschubvorgang angestoßen, um Artikel vom Palettenregallager 3 in das Regallager 4 umzulagern.

Daher können drei Warentransportströme nach der Warenanlieferung des Schrittes S1 unterschieden werden:
- Ein erster Transportfluss F1, bei dem Artikel im Regallager 4 eingelagert werden.
- Ein zweiter Transportfluss F2, bei dem Artikel im Palettenregallager 3 eingelagert werden.
- Ein dritter Transportfluss F3, bei dem Artikel zuerst im Palettenregallager 3 eingelagert und danach ins Regallager 4 umgelagert werden.

Beim ersten Transportfluss F1 gemäß Figur 2 werden nach der Warenanlieferung auf Wareneingangs-Ladungsträgern im zweiten Schritt S2 gemäß Figur 2 die Artikel lagenweise nach bekannten Verfahren depalettiert (z. B. durch Depalettierroboter mit Saug und Greifeinrichtung) und vereinzelt.

Nach dem Vereinzeln werden die Artikel im nächsten Schritt S3 auf einen Transport-Ladungsträger 7 für einen Transport der Artikel 1 auf der Fördertechnik 19 zum Regallager 4 aufgegeben.

Die Aufgabe der Artikel auf den Transport-Ladungsträger erfolgt automatisch mit Hilfe der Umsetzeinrichtung 8a gemäß Figur 4. Der Transport-Ladungsträger 7 ist mit einer Identifikationsnummer versehen, um den Transport-Ladungsträger 7 zu einem bestimmten Lagerort im Regallager 4 mit Hilfe eines Lagersteuerrechners zu steuern. Bei der Beladung des Transport-Ladungsträgers 7 mit einem Artikel 2 wird die Artikelnummer mit der Identifikationsnummer durch das Lagersteuersystem verknüpft.

Danach wird in Schritt S4 der Artikel 2 mit Hilfe des Transport-Ladungsträgers 7 zum Lagerort transportiert.

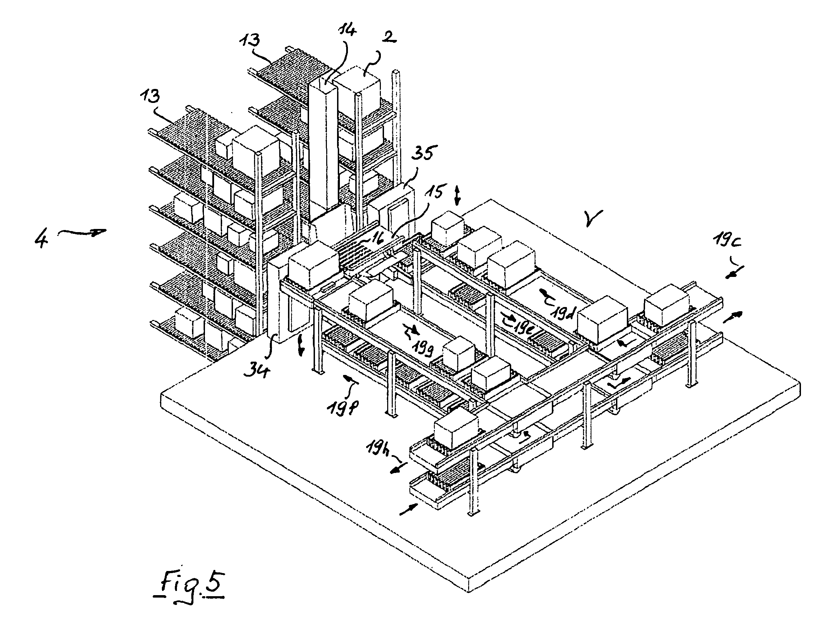

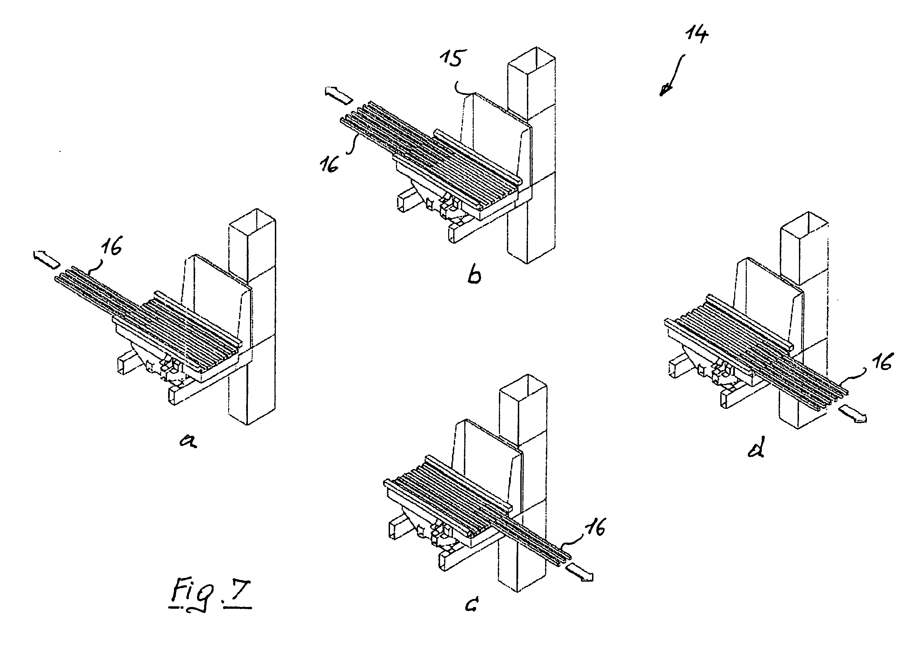

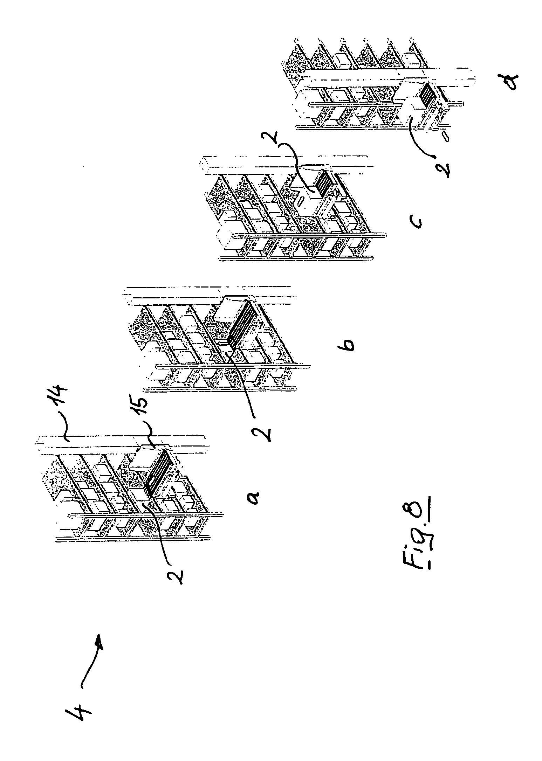

Im nächsten Schritt S5 erfolgt die Einlagerung im Regallager 4. Das Regallager 4 ist als Hochregal ausgebildet, in das die Artikel 2 mit dem automatischen, vom Lagerverwaltungssystem gesteuerten Regalbediengerät 14 eingelagert werden. Dazu wird der Artikel 2 vom Transport-Ladungsträger 7 auf das Lastaufnahmemittel 15 des Regalbediengeräts 14 im Bereich der Vorzone V des Regallagers gemäß Figur 5, rechts, übergeben. Das Regalbediengerät 14 befördert den Artikel 2 zum Lagerort, wo er mit Hilfe des Lastaufnahmemittels 15 am Lagerort gemäß den Figuren 7 und 8 eingelagert wird.

Für das Kommissionieren von Artikeln werden Artikel aus dem Regallager 4 zur Auslagerung aus dem Regallager 4 durch das Lagerverwaltungssystem angefordert. Die Anforderung erfolgt in Abhängigkeit der Bestellmenge und der Verfügbarkeit der Artikel entweder vom Palettenregallager 3 oder dem Regallager 4.

In Schritt S6 werden die Artikel 2 aus dem Regallager 4 mit Hilfe des Regalbediengerätes 14 ausgelagert. Die Artikel werden im Zuge der Auslagerung auf den Transport-Ladungsträger 7 für den Transport auf der Fördertechnik zum Kommissionierbereich 23 gemäß Figur 4 links übergeben.

Nach der Auslagerung erfolgt im nächsten Schritt S7 der Transport auf der Fördertechnik mit Hilfe der Transport-Ladungsträger zum Kommissionierbereich.

Im darauffolgenden Schritt S8 folgt die Kommissionierung an den Kommissionierstationen 6. Dabei werden die Artikel entweder manuell oder automatisch vom Transport-Ladungsträger 7 auf den Ziel-Ladungsträger 30 oder einen Hilfs-Ladungsträger 31 übergeben. Bei der automatischen Durchführung des Schritts S8 werden die Artikel mit Hilfe eines Roboters vom Transport-Ladungsträger 7 entnommen und auf einen der Ziel- Ladungsträger 30 oder Hilfs-Ladungsträger 31 aufgeteilt. Bei der manuellen Durchführung des Schritts S8 entnehmen Lagerarbeiter die Artikel und stapeln sie auf dem Ziel-Ladungsträger 3 oder auf dem Hilfs-Ladungsträger 31 in der Kommissionierstation 6. Im Ausführungsbeispiel nach Figur 1 sind fünf Kommissionierstationen vorgesehen, mit jeweils sechs Stellplätzen für Ziel-Ladungsträger 30 oder Hilfs-Ladungsträger 31.

Nach dem Beladen des Ziel-Ladungsträgers 30 werden diese mit Hilfe von Fördertechnik auf einzelne Versandrampen im Warenausgangsbereich 18 aufgeteilt. Es erfolgt die Verladung auf Kraftfahrzeug oder Bahn an der Versandrampe und die Auslieferung.

Werden Hilfs-Ladungsträger 31 verwendet, vorzugsweise ein oben und unten offenen vertikaler Schacht mit vier Seitenwänden und einem höhenverstellbaren Boden, so befüllt der Lagerarbeiter den Schacht von oben bei gleichzeitiger Verstellung des hochgestellten Bodens nach unten, wobei nach Befüllung des Schachts bzw. Hilfs-Ladungsträgers dieser zu einer Beladestation 21 im Warenausgangsbereich 18 transportiert wird, und dort der Inhalt bzw. der Artikelstapel auf einen Ziel-Ladungsträger, vorzugsweise einem Rollcontainer, umgelagert wird, bevor er zur Versandrampe und zur Auslieferung gelangt.

Im zweiten Transportfluss F2 gemäß Figur 2, bei dem Artikel im Palettenregallager 3 eingelagert werden, werden nach der Warenanlieferung S1 auf Wareneingangs-Ladungsträgern in einem Schritt S5a die Artikel im Palettenregallager 3 eingelagert. Die Einlagerung erfolgt bevorzugt mit einem Regalbediengerät für Paletten.

Für das Kommissionieren von Artikeln im Lager werden Artikel aus dem Palettenregallager 3 zur Auslagerung durch das Lagerverwaltungssystem angefordert.

In Schritt S6a werden die Artikel aus dem Palettenregallager 3 mit Hilfe des Regalbediengerätes ausgelagert und auf den Wareneingangs-Ladungsträgern bzw. Paletten zum Kommissionierbereich 23 über die Fördertechnik 20 gemäß Figur 1, links transportiert.

Die Kommissionierung erfolgt danach im Schritt S8 manuell durch die Entnahme von Artikeln durch einen Lagerarbeiter, der die Artikel auf einzelne Ziel-Ladungsträger verteilt. Werden nicht alle Artikel vom Wareneingangs-Ladungsträger entnommen, wird dieser wieder in das Palettenregallager 3 eingelagert.

Im dritten Transportfluss F3 gemäß Figur 2 erfolgt zuerst eine Einlagerung im Palettenregallager 3 in Schritt S5a. Vor der Kommissionierung erfolgt jedoch eine Umlagerung vom Palettenregallager 3 ins Regallager 4, indem Artikel aus dem Palettenregallager 3 ausgelagert und danach depalletiert, vereinzelt und auf einen Transport-Ladungsträger 2 umgeladen werden, um sie nach dem Transport zum Regallager gemäß Schritt S4 im Regallager 4 einzulagern.

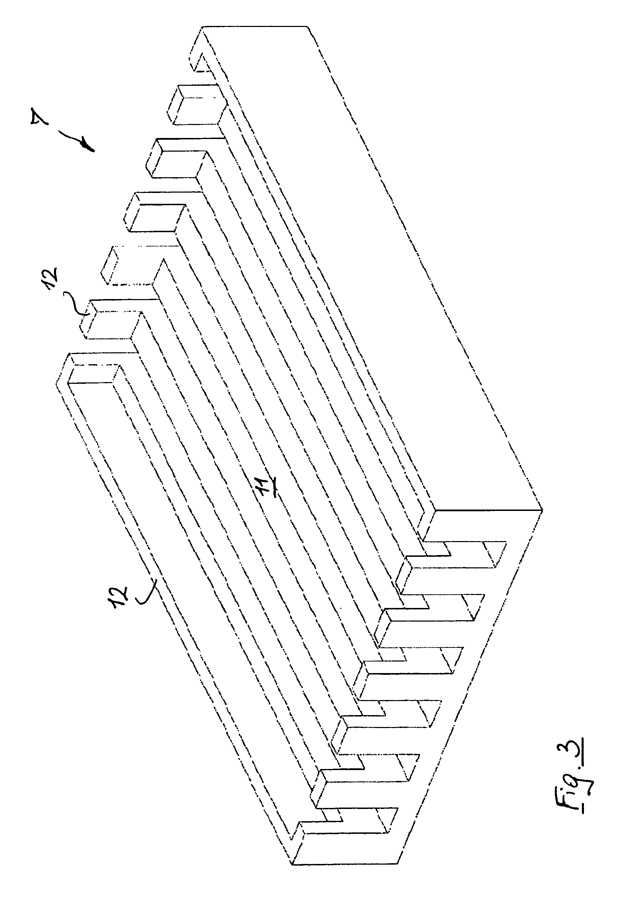

In Figur 3 ist ein Transport-Ladungsträger 7 in besonderer Ausführung veranschaulicht. Der Transport-Ladungsträger weist einen flachen Boden für den Transport auf der Fördertechnik 19 auf. Gekennzeichnet ist der Transport-Ladungsträger 7 durch das Profil 11 an der Oberseite.

Das Profil besteht aus einer Abfolge von Rippen, durch das sich Vertiefungen für den Eingriff eines Lastaufnahmemittels ergeben. Die Vertiefungen erstrecken sich über die gesamte Länge des Transport-Ladungsträgers 7. Insbesondere weist die oberseitige Profilierung 11 des Transport-Ladungsträgers 7 geradlinige, oben offene Nuten auf und ist flach und ohne Durchgänge ausgebildet

Außerdem hat der Transport-Ladungsträger 7 Seitenwände bzw. eine durch die Nuten bzw. Vertiefungen unterbrochene Umfangswand 12, um das Abrutschen der Artikel 2 vom Transport- Ladungsträger 7 zu verhindern.

Der Transport-Ladungsträger 7 besitzt ferner eine (nicht veranschaulichte) seitliche Vertiefung zum Anbringen eines Etiketts oder Transponders zur Identifikation des Transport-Ladungsträgers 7.

In Figur 4 ist die Umsetzeinrichtung 8a für das Beladen von Transport-Ladungsträgern 7 mit Artikeln gezeigt.

Die Umsetzeinrichtung 7 umfasst eine zuführenden Fördertechnik 19a für leere Transport-Ladungsträger 7, eine zuführende Fördertechnik 19b für Artikel 2 und eine abführenden Fördertechnik 19c sowie eine höhenverstellbare Lastaufnahme 10 sowie eine Schiebeeinrichtung 33.

Die zuführende Fördertechnik 19b für Artikel 2 ist auf einer Ebene gelegen, die höher liegt als die zuführende Fördertechnik 19a für leere Transport-Ladungsträger 7.

Zur Beladung eines Transport-Ladungsträgers 7 mit einem Artikel 2 wird der Artikel in eine Übergabeposition P geführt und ein leerer Transport-Ladungsträger 7 der Fördertechnik 19a darunter positioniert.

Mit Hilfe der Schiebeeinrichtung 33 werden die Artikel der Fördertechnik 19b auf die Lastaufnahme 10 übergeschoben. Die Lastaufnahme 10 ist gabelförmig ausgebildet und ist vertikal verfahrbar.

Nach der Übergabe des Artikels 2 auf die Lastaufnahme 10 wird die Lastaufnahme vertikal abgesenkt. Dabei greifen die gabelförmig ausgebildeten Zinken der Lastaufnahme in die Vertiefungen bzw. in das Profil 11 des leeren positionierten Transport-Ladungsträgers 7 und übergeben dabei den Artikel 2 auf den Transport-Ladungsträger 7.

Der Transport-Ladungsträger 7 wird daraufhin auf der Fördertechnik 19c abgeführt und gelangt von dort in die Vorzone V des Regallagers 4 gemäß Figur 5.

Die Lastaufnahme 10 wird in die obere Aufnahmeposition P gemäß Figur 4 zurückgeführt, während darunter ein nächster Transport-Ladungsträger 7 der Fördertechnik 19a für die Aufnahme eines nächsten Artikels positioniert wird.

In Figur 5 ist ein Ausschnitt aus dem als Doppelregal ausgebildeten Regallager 4 gezeigt, mit einem in einer Regalgasse verfahrbaren Regalbediengerät 14 sowie einer Vorzone V, in der der Umlagerungsvorgang eines Artikels 2 von der Förderstrecke 19c über eine rechtwinklig angeschlossene zuführende Förderstrecke 19d vom Transport-Ladungsträger 7 auf das Regalbebediengerät 14 gemäß Figur 5, rechts (Einlagern) bzw. vom Regalbediengerät 14 auf den leeren Transport-Ladungsträger 7 gemäß Figur 5, links (Auslagern) vollzogen wird.

Die Vorzone V gemäß Figur 5 umfasst eine zuführende Fördertechnik 19d für einzulagernde Artikel 2 und eine darunter liegende abführende Fördertechnik 19e für entleerte Transport-Ladungsträger 7 für die Einlagerung von Artikeln im Regallager 4.

Für das Auslagern von Artikeln steht die zuführende Fördertechnik 19f für leere Transport-Ladungsträger und die darüber liegende abführende Fördertechnik 19g für Artikel 2 zur Verfügung.

Darüber hinaus befinden sich zwei Lifte 34, 35 im Bereich der Vorzone V, die an die Stirnseite einer jeden Hälfte des (Doppel-)Regallagers 4 angrenzen.

Der eine Lift 35 befindet sich auf der Einlagerseite gemäß Figur 5 rechts, der zweite Lift 34 auf der Auslagerseite gemäß Figur 5 links. Beide Lifte 34, 35 besitzen eine Hubtisch, der leere Transport-Ladungsträger 7 höhenverstellen kann, auf der Einlagerseite von der zuführenden Förderstrecke 19d nach unten für einen Anschluss zur abführenden Förderstrecke 19e, sowie auf der Auslagerseite des Regallagers 4 von der zuführenden Förderstrecke 19f nach oben für einen Anschluss zur abführenden Förderstrecke 19g. Die Förderstrecken 19d und 19g verlaufen parallel zueinander und liegen auf dem Niveau der Förderstrecke 19c. Darunter verlaufen parallel zueinander die Förderstrecken 19e und 19f auf gleichem tieferen Niveau.

Nachfolgend wird das Einlagern von vereinzelten Artikeln 2 in das Regallager 4 beschrieben:
Beim Einlagern werden Artikel 2 auf Transport-Ladungsträgern 7 von der Fördertechnik 19c kommend auf die zuführende Fördertechnik 19d übergeschoben und von der Fördertechnik 19d an eine Übergabeposition des hochgehobenen Hubtisches des ersten Lifts 35 geführt, und von dort auf den Hubtisch übergeschoben.

Mit Hilfe des auf den hochgehobenen Hubtisch ausgerichteten Lastaufnahmemittels 15 wird der Artikel 2 dem Regalbediengerät 14 übergeben. Das Lastaufnahmemittel 15 ist mit horizontal verfahrbaren gabelförmigen Zinken 16 ausgestattet, die Artikel unterfahren können, indem die Zinken des Lastaufnahmemittels 15 von der Seite in die Vertiefungen bzw. Profilierung 11 des Transport-Ladungsträgers 7 geführt werden.

An der Übergabeposition unterfährt also das gabelförmig ausgeführte Lastaufnahmemittel 15 den Artikel 2 und hält ihn auf dem Niveau der Förderstrecke 19d.

Der Artikel wird vom Transport-Ladungsträger 7 getrennt, indem der Transport-Ladungsträger 7 mit dem ersten Lift 35 nach unten abgesenkt wird.

Mit einer horizontalen Bewegung der Zinken des Lastaufnahmemittels 15 gemäß Figur 5 nach links wird der Artikel in die Nullstellung des Lastaufnahmemittels gefahren und kann mithin in die Regalgasse des Doppelregals einfahren.

Der leere Transport-Ladungsträger 7 wird mit dem zweiten Lift 35 nach unten gefördert und auf die abziehende Fördertechnik 19e übergeben, die einen (in Figur 5 nicht veranschaulichten) Anschluss zur parallelen Fördertechnik 19f besitzen kann, um einen kurzen Förderweg von leeren Transport-Ladungsträgern 7 innerhalb der Vorzone V einzurichten.

Der Artikel 2, der sich auf dem Lastaufnahmemittels 15 des Regalbediengerätes 14 befindet, wird mit dem Regalbediengerät in der Regalgasse zum Lagerort im Regallagers 4 gebracht, der ihm durch das Lagerverwaltungssystem zugewiesen wurde.

Das Regallager 4 ist durch den profilierten Fachboden 13 gekennzeichnet, der ebenso wie der Transport-Ladungsträger 7 eine Profilierung mit Vertiefungen aufweist. Der profilierte Fachboden 13 einer jeden Regalebene ist ein durchgehender Boden ohne Seitenwände, so dass keine örtlich definierten Stellflächen bzw. Fächer gebildet sind. Dadurch lässt sich zusammen mit einem besonders ausgebildeten Lastaufnahmemittel 16 des Regalbediengeräts eine großer Lagerdichte selbst bei Einlagerung unterschiedlich dimensionierter Artikel erzielen, wie nachfolgend noch beschrieben wird.

Zur Abgabe des Artikels auf den Fachboden wird der Artikel mit Hilfe des Lastaufnahmemittels 15 des Regalbediengerätes 14 vor dem vom Lagerverwaltungssystem ausgewählten leeren Fachboden positioniert und mit Hilfe der ausfahrenden Zinken des Lastaufnahmemittels über dem Fachboden so positioniert, dass nach definierter Abwärtsbewegung die Zinken 16 in Vertiefungen des Fachbodens greifen, und dadurch der Artikel auf der Oberseite des Fachbodens abgesetzt wird. Anschließend werden die ausgefahren Zinken seitlich aus den Vertiefungen des Fachbodens heraus in die Nullstellung des Lastaufnahmemittels zurückgefahren, wobei der abgesetzte Artikel im Regalfach verbleibt. Das Regalbediengerät steht nun für einen weiteren Ein- oder Auslagerungsvorgang zur Verfügung.

Das Auslagern erfolgt prinzipiell umgekehrt wie das vorstehend beschriebenen Einlagern:
Beim Auslagern wird ein Artikel mit Hilfe des Regalbediengeräts vom Lagerort zu einer Übergabeposition in der Vorzone V transportiert.

Die Entnahme vom Lagerort erfolgt durch das Lastaufnahmemittel 15 des Regalbediengerätes 14. Die gabelförmigen, horizontal verfahrbaren Elemente des Lastaufnahmemittel 15 unterfahren den am Lagerort befindlichen Artikel, indem sie in die Vertiefungen des Fachbodens 13 greifen.

Durch eine vertikale Hubbewegung wird der Artikel vom Fachboden 13 gehoben und auf das Lastaufnahmemittel übergeben. Mit Hilfe des Regalbediengerätes 14 wird der Artikel zu einer Übergabeposition gemäß Figur 5, links geführt.

An der Übergabeposition wird ein leerer Transport- Ladungsträger 7 bereitgestellt, der mit dem zweiten Lift 34 von der zuführenden Fördertechnik 19f nach oben in die Übergabeposition geführt wird, an der der Artikel, der auf den Transport-Ladungsträger 7 übergeben wird, bereitgestellt wird.

Ist der Transport-Ladungsträger 7 in der Übergabeposition angekommen, werden die Zinken bzw. wird das gabelförmig ausgebildete, horizontal verfahrbare Element des Lastaufnahmemittels aus den Vertiefungen des Transport-Ladungsträgers gezogen.

Der Artikel 2 ist nun auf dem Transport- Ladungsträger 7 abgestützt und wird vom Übergabeplatz auf die abführende Fördertechnik 19g übergeschoben.

Nach der Auslagerung wird der Artikel 2 mit Hilfe des Transport-Ladungsträgers 7 auf der Förderstrecke 19h zum Kommissionierbereich 23 gemäß Figur 1 transportiert.

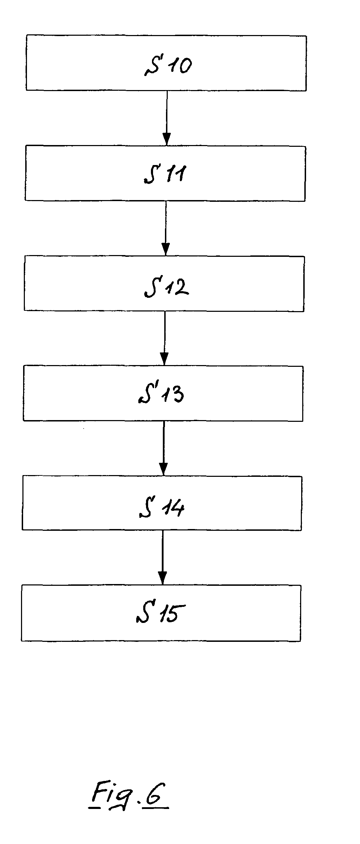

In Figur 6 sind die Elemente eines Computersystems gezeigt, das den Kommissioniervorgang im Warenumschlaglager bzw. Lagersystem 1 steuert, wobei

| | |
|---|---|
| S10 | = Erfassung eines Kommissionierauftrags |
| S11 | = Bestimmung der Anzahl von Ziel-Ladungsträgern |
| S12 | = Bestimmung einer Beladesequenz in Abhängigkeit von Artikeln |
| S13 | = Entnahme der Artikel aus dem Lagerregal |
| S14 | = Transport der Artikel zu den Ziel-Ladungsträgern |
| S15 | = Beladung der Ziel-Ladungsträger |

In einem ersten Schritt S10 wird ein Kommissionierauftrag erfasst, nämlich die für einen Kunden zu kommissionierenden Artikel und die Anzahl der Artikel. Daraufhin bestimmt das Lagersystem 1 in einem zweiten Schritt S11 die Anzahl der Ziel-Ladungsträger, die benötigt werden, um die Artikel auszuliefern, und bestimmt in einem nächsten Schritt S12 die Beladungssequenz des Ziel-Ladungsträgers 3 mit den Artikeln, die für die Sortiereinrichtung 32 gemäß Figur 1 benötigt wird. Daraufhin fordert das Computersystem bzw. Lagerverwaltungssystem Artikel 2 entweder aus dem Regallager 4 oder dem Palettenlegallager 3 an. Das System entnimmt die Artikel automatisch und steuert sie zu einer ausgewählten Kommissionierstation 6 im Kommissionierbereich 23 gemäß Figur 1 in einem Schritt S14. Sind die Artikel über Fördertechnik an der Kommissionierstation 6 bereitgestellt, werden die Artikel auf Ziel-Ladungsträger 30 oder Hilfs-Ladungsträger 31 mit Hilfe des Systems gemäß Schritt S15 umgelagert.

Figur 7 zeigt das in der Regalgasse verfahrbare Regalbediengerät 14 mit einem Lastaufnahmemittel 15 in größerer Einzelheit. Das Lastaufnahmemittel 15 ist höhenverschieblich an einem Mast montiert. Das Lastaufnahmemittel besteht aus einer Plattform, auf der teleskopartig ausfahrbare Zinken 16 platziert sind. Die Zinken können einzeln oder in Gruppen sowohl nach rechts gemäß den Figuren 7c und 7d als auch nach links gemäß den Figuren 8a und 8b ausgefahren werden, um beide Hälften des Doppelregals bzw. Regallagers 4 gemäß Figur 5 zu bedienen.

Fig. 8 veranschaulicht die Aufnahme eines Artikels 2 vom profilierten Fachboden 13 eines Regallagers 4 auf das Lastaufnahmemittel 15. Dabei wird der Artikel 2 durch das Eingreifen der Zinken 16 des Lastaufnamemittels 15 gemäß Figur 7 in den profilförmig ausgebildeten Fachboden unterfahren, wie dies in Figur 8a dargestellt und vorgenannt bereits beschrieben worden ist.

Ist der Artikel 2 unterfahren, wird das Lastaufnahmemittel mit Hilfe des Lifts am Mast des Regalbediengerätes 14 angehoben, wie dies in Figur 8b dargestellt ist. Der Artikel 2 befindet sich nun auf den Zinken 16 des Lastaufnahmemittels 15.

Danach werden die Zinken 16 des Lastaufnahmemittels 15 wieder eingefahren, so dass sich der Artikel vollständig auf der Plattform des Lastaufnahmemittels 15 in der Nullstellung befindet, wie dies in Figur 8c gezeigt ist.

Danach wird das Regalbediengerät 14 in der Regalgasse verfahren, um den Artikel in die Vorzone V des Regallagers 4 zu transportieren. In der Vorzone V wird der Artikel 2 auf einen Transport-Ladungsträger 7 geladen, wie dies bereits beschrieben worden ist.

Für einen Betrieb werden nach Figur 7 nur so viele Zinken 16 ausgefahren, wie für eine sichere Abstützung eines Artikels entsprechend seiner Dimensionierung und seinem Gewicht benötigt werden. Insbesondere wird vermieden, dass seitlich vom abgestützten (großen oder kleinen) Artikel übermäßig viele ungenutzte Zinken ausgefahren werden. Gemäß Figur 7c ist das Lastaufnahmemittel 15 beispielsweise für einen kleinen Artikel, gemäß Figur 7a für einen mittelgroßen Artikel und gemäß den Figuren 7b und 7d für einen großen Artikel ausgelegt. Dadurch können unterschiedlich große Artikel in dichter Nachbarschaft auf einem profilierten Fachboden 13 des Regallagers 4 platziert werden, wodurch eine große Lagerdichte im Regallager 4 eingerichtet werden kann.

Ersichtlich wird mithin gemäß Figur 1 ein Lagersystem zum Lagern und Kommissionieren von Artikeln 2 in Form von Einzelartikeln und/oder Packungseinheiten eingerichtet, mit einem Palettenregallager, in dem angelieferte Artikel auf Paletten gelagert werden, und einem Regallager, in dem vereinzelte Artikel für eine Kommissionierung gelagert werden, wobei das Lagersystem 1 eine Entscheidungsstation 5 mit der Entscheidung E umfasst, ob die auf Eingangs-Ladungsträgern angelieferten identifizierten Artikel in das Palettenregallager 3, nämlich Schnelldreher, oder in das Regallager 4, nämlich Langsamdreher, eingelagert werden sollen. Die Entscheidungsstation 5 ist Implement des Lagersteuerrechners bzw. Lagerverwaltungssystems.

Ferner umfasst das Lagersystem ein Regallager 4, insbesondere zumindest ein Hochregal, in Voranordnung zu zumindest einer Kommissionierstation 6, in dem aufgrund der Entscheidung E ausgewählte Artikel ohne Ladungsträger ein- und auslagerbar sind, wobei die ausgewählten vereinzelten Artikel auf oberseitig besonders profilierten Transport-Ladungsträgern zu dem Regallager und von dem Regallager zur Kommissionierstation förderbar sind. Das Lagersystem 1 umfasst ferner ein zum Regallager 4 parallel geschaltetes Palettenregallager 3 in Voranordnung zu der oder zu den Kommissionierstation(en), aus dem Artikel auf Paletten auslagerbar und zur Kommissionierstation förderbar sind.

## Patentansprüche

1. Verfahren zum Lagern und Kommissionieren von Artikeln (2) in Form von Einzelartikeln und/oder Packungseinheiten in einem Lagersystem (1) bestehend aus
- einem Palettenregallager (3) zur Lagerung von auf Wareneingangs-Ladungsträgern angelieferten Artikeln,
- einer Einrichtung (8) zur Depalletierung, Vereinzelung und Umlagerung von Artikeln von Eingangs- Ladungsträgern auf Transport-Ladungsträger (7),
- einem Regallager (4) zur Lagerung vereinzelter Artikel als Zwischenpuffer vor der Kommissionierung,
- zumindest einer Kommissionierstation (6), in der Artikel auf einen Ziel-Ladungsträger (30) geladen werden, und
- einer Fördertechnik (19) zum Transport von vereinzelten Artikeln zum Regallager und vom Regallager zur Kommissionierstation, wobei Transport-Ladungsträger (7) für den Transport von vereinzelten Artikeln auf der Fördertechnik verwendet werden,
**dadurch gekennzeichnet,**
- **dass** vereinzelte Artikel (2) im Regallager (4) ohne Transport-Ladungsträger (7) gelagert werden.

2. Lagersystem (1) zum Lagern und Kommissionieren von Artikeln (2) in Form von Einzelartikeln und/oder Packungseinheiten zur Durchführung des Verfahrens nach Anspruch
- Transport-Ladungsträger (7),
- einem Palettenregallager (3) zur Lagerung von auf Wareneingangs-Ladungsträgern angelieferten Artikeln,
- einer Einrichtung (8) zur Depalletierung, Vereinzelung und Umlagerung von Artikeln von Eingangs- Ladungsträgern auf Transport-Ladungsträger (7),
- einem Regallager (4) zur Lagerung vereinzelter Artikel als Zwischenpuffer vor der Kommissionierung,
- zumindest einer Kommissionierstation (6), in der Artikel auf einen Ziel-Ladungsträger (30) geladen werden, und
- einer Fördertechnik (19) zum Transport von vereinzelten Artikeln auf Transport-Ladungsträgern (7) zum Regallager (4) und vom Regallager zur Kommissionierstation (6),
**dadurch gekennzeichnet,**
**dass** eine oberseitige Profilierung (11) der Transport-Ladungsträger(7) in Form von geradlinigen oben offenen Nuten vorgesehen ist,
**dass** die Einrichtung (8) zur Depalletierung, Vereinzelung und Umlagerung von Artikeln (2) von Eingangs-Ladungsträgern auf Transport-Ladungsträger(7) eine Umsetzeinrichtung (8a) mit einer höhenverstellbaren Lastaufnahme (10) aufweist, deren parallele Zinken in einer oberen Stellung (P) einen vereinzelten Artikel einerseits übernehmen können und in einer unteren Stellung in die oberseitige Profilierung (11) eines angeförderten positionierten leeren Transport-Ladungsträgers (7)) andererseits einbringbar sind, wobei ein auf den Zinken nach unten bewegter Artikel auf dem positionierten Transport-Ladungsträger abstellbar und der Transport-Ladungsträger nebst Artikel zum Regallager (4) abförderbar ist,
**dass** das profilierte Fachböden (13) aufweisende Regallager ein verfahrbares Regalbediengerät (14) mit einem höhenverstellbaren ausfahrbaren und/oder teleskopierbaren Lastaufnahmemittel (15) besitzt, dessen verstellbare Zinken (16) einerseits in die profilierten Fachböden (13) für ein Ein- und Auslagern von vereinzelten Artikeln (2) in das und aus dem Regallager (4) einbringbar und andererseits in die oberseitige Profilierung (11) eines angeförderten positionierten Transport- Ladungsträgers einbringbar sind, um vereinzelte Artikel (2) vom Transport-Ladungsträger (7) auf das Lastaufnahmemittel (15) oder umgekehrt vom Lastaufnahmemittel zum Transport-Ladungsträger zu übergeben.

3. Lagersystem nach Anspruch 2,
**dadurch gekennzeichnet,**
**dass** der Transport-Ladungsträger (7) flach und ohne Durchgänge ausgebildet ist.

4. Lagersystem nach Anspruch 2 oder 3,
**dadurch gekennzeichnet,**
**dass** der Transport-Ladungsträger (7) einen oberen Umfangsrand (12) besitzt.

5. Lagersystem nach einem der Ansprüche 2 bis 4,
**dadurch gekennzeichnet,**
**dass** das Lastaufnahmemittel. (15) des Regalbediengeräts Zinken (16) aufweist, die beidseits des Lastaufnahmemittels ausfahrbar sind.

6. Lagersystem nach einem der Ansprüche 2 bis 5,
**dadurch gekennzeichnet,**
**dass** der Artikel (2) in dichter seitlicher Nachbarschaft zu einem anderen Artikel auf dem profilierten Fachboden (13) des Regalagers (4) platzierbar ist, wobei bei einem Lastaufnahmemittel (15) nur eine Gruppe von Zinken (16) entsprechend der Breite eines ein- oder auszulagernden Artikels (2) ausgefahren wird.

7. Lagersystem nach einem der Ansprüche 2 bis 6,
**dadurch gekennzeichnet,**
**dass** eine Palettentransport-Fördertechnik (20) für den Transport von Artikeln auf Paletten zu und von dem Palettenregallager und eine Transport-Ladungsträger- Fördertechnik (19) für den Transport von vereinzelten Artikeln (2) auf den Transport-Ladungsträgern (7) sowie von leeren Transport-Ladungsträgern vorgesehen sind.

8. Lagersystem nach Anspruch 7,
**dadurch gekennzeichnet,**
**dass** die Palettentransport-Fördertechnik (20) und/oder die Transportladungsträger-Fördertechnik (19) vorzugsweise staufähige Rollen- oder Kettenförderer sind.

9. Lagersystem nach einem der Ansprüche 2 bis 8,
**gekennzeichnet durch**
eine Kommissionierstation (6) zum Kommissionieren von Artikeln von einer Palette und von vereinzelten Artikeln (2) von Transport-Ladungsträgern (7) auf Ziel- Ladungsträger (30), die jeweils einem Kommissionierauftrag entsprechen.

10. Lagersystem nach Anspruch 9,
**dadurch gekennzeichnet,**
**dass** der Ziel-Ladungsträger (30) ein angeförderter Versand-Ladungsträger eines entsprechenden Kommissionierauftrags ist, der nach einem Beladen in der Kommissionierstation (6) zum Warenausgangsbereich (18) förderbar ist.

11. Lagersystem nach einem der Ansprüche 2 bis 10,
**dadurch gekennzeichnet,**
**dass** eine Sortiereinrichtung (32) zur Erstellung einer Sequenz von Paletten und Transport-Ladungsträgern zur sequenzierten Bereitstellung von Artikeln (2) in der Kommissionierstation (6) vorgesehen ist.

12. Lagersystem nach einem der Ansprüche 2 bis 11,
**gekennzeichnet durch**
ein zum Regallager parallel geschaltetes Palettenregallager (4) in Voranordnung zur Kommissionierstation (6), aus dem Artikel auf Paletten auslagerbar und zur Kommissionierstation förderbar sind.

13. Lagersystem nach einem der Ansprüche 2 bis 12,
**gekennzeichnet durch**
eine Entscheidungsstation (5) mit der Entscheidung (E), ob die auf Eingangs-Ladungsträgern angelieferten identifizierten Artikel in das Palettenregallager (3) oder in das Regallager (4) eingelagert werden sollen.

14. Lagersystem nach Anspruch 13,
**dadurch gekennzeichnet,**
**dass** das Kriterium der Entscheidung (E) die Umschlagshäufigkeit des kommissionierten Artikels (2) und der Lagerbestand des Artikels im Regallager (4) ist, wobei im Falle der maximalen Kapazitätsauslastung des Regallagers (4) Artikel (2), die für das Regallager bestimmt sind, vorübergehend im Palettenregallager (3) auf Paletten zwischengelagert und nach Freiwerden von Lagerkapazität im Regallager (4) nach Depalletierung vereinzelt in das Regallager umgelagert werden.

## Claims

1. Process for storing and commissioning articles (2) in the form of single articles and/or packing units in a storage system (1) consisting of
- a pallet bay storage (3) for storing articles supplied on goods receiving load carriers,
- a means (8) for depalletizing, separating and re-storing articles from goods receiving load carriers to transport load carriers (7),
- a bay storage (4) for storing separated articles as a buffer before commissioning,
- at least one commissioning station (6), in which articles are loaded onto a targeted load carrier (30), and
- a conveying means (19) for transporting separated articles to the bay storage and from the bay storage to the commissioning station, whereby transport load carriers (7) are used for the transport of separated articles to the conveying means,
**characterized in that**
- separated articles (2) are stored in the bay storage (4) without transport load carriers (7).

2. Storage system (1) for storing and commissioning articles (2) in the form of single articles and/or packing units for carrying out the process in accordance with claim 1, with
- transport load carriers (7),
- a pallet bay storage (3) for storing articles supplied on goods receiving load carriers,
- a means (8) for depalletizing, separating and re-storing articles from goods receiving load carriers to transport load carriers (7),
- a bay storage (4) for storing separated articles as a buffer before commissioning,
- at least one commissioning station (6), in which articles are loaded onto a targeted load carrier (30), and
- a conveying means (19) for transporting separated articles on transport load carriers (7) to the bay storage (4) and from the bay storage to the commissioning station (6),
**characterized by**
- a profiling (11) on the top side of the transport load carriers (7) in the form of linear grooves open at the top,
- the means (8) for depalletizing, separating and re-storing articles (2) from goods receiving load carriers to transport load carriers (7) has a transfer means (8a) with a height-adjustable load pickup (10), whose parallel prongs can take delivery of a separated article in an upper position (P), on the one hand, and can be brought into a lower position in the profiling (11) on the top side of a conveyed, positioned, empty transport load carrier (7), on the other hand, whereby an article moved downwards on the prongs can be placed on the positioned transport load carrier, and the transport load carrier plus the article can be conveyed to the bay storage (4),
- the bay storage, which has profiled shelves (13), has a displaceable bay storage and retrieval unit (14) with a height-adjustable, extendable and/or telescopic load pickup means (15), the adjustable prongs (16) of which can be brought into the profiled shelves (13) for loading and retrieving separated articles (2) into and out of the bay storage (4), on the one hand, and, can be brought into the profiling (11) on the top side of a conveyed, positioned transport load carrier, on the other hand, to transfer separated articles (2) from the transport load carrier (7) to the load pickup means (15) or vice versa from the load pickup means to the transport load carrier.

3. Storage system in accordance with claim 2,
**characterized in that**
the transport load carrier (7) is designed as flat and without passages.

4. Storage system in accordance with claim 2 or 3,
**characterized in that**
the transport load carrier (7) has an upper peripheral edge (12).

5. Storage system in accordance with one of the claims 2 through 4,
**characterized in that**
the load pickup means (15) of the bay storage and retrieval unit has prongs (16), which can be extended on both sides of the load pickup means.

6. Storage system in accordance with one of the claims 2 through 5,
**characterized in that**
the article (2) can be placed in close, lateral proximity to another article on the profiled shelf (13) of the bay storage (4), whereby only one set of prongs (16) corresponding to the width of an article (2) to be loaded or retrieved is extended in case of a load pickup means (15).

7. Storage system in accordance with one of the claims 2 through 6,
**characterized in that**
a pallet transport conveying means (20) for transporting articles on pallets to and from the pallet bay storage and a transport load carrier conveying means (19) for transporting separated articles (2) on the transport load carriers (7) as well as empty transport load carriers are provided.

8. Storage system in accordance with claim 7,
**characterized in that**
the pallet transport conveying means (20) and/or the transport load carrier conveying means (19) are preferably accumulatable roller or chain conveyors.

9. Storage system in accordance with one of the claims 2 through 8,
**characterized by**
a commissioning station (6) for the commissioning of articles from a pallet and of separated articles (2) from transport load carriers (7) to targeted load carriers (30), which correspond to a commissioning order each.

10. Storage system in accordance with claim 9,
**characterized in that**
the targeted load carrier (30) is a conveyed shipping load carrier of a corresponding commissioning order, which can be conveyed to the outgoing goods area (18) after a loading in the commissioning station (6).

11. Storage system in accordance with one of the claims 2 through 10,
**characterized in that**
a sorting means (32) is provided for preparing a sequence of pallets and transport load carriers for the sequenced preparation of articles (2) in the commissioning station (6).

12. Storage system in accordance with one of the claims 2 through 11,
**characterized by**
a pallet bay storage (4) connected in parallel with the bay storage in prearrangement to the commissioning station (6), from which articles can be retrieved on pallets and conveyed to the commissioning station.

13. Storage system in accordance with one of the claims 2 through 12,
**characterized by**
a decision station (5) with the decision (E), whether identified articles supplied on the goods receiving load carriers shall be loaded into the pallet bay storage (3) or into bay storage (4).

14. Storage system in accordance with claim 13,
**characterized in that**
the criterion of the decision (E) is the turnover rate of the commissioned article (2) and the stock of the article in the bay storage (4), whereby, in case of maximum capacity utilization of the bay storage (4), articles (2), which are intended for the bay storage, are temporarily stored on pallets in the pallet bay storage (3) and, after storage capacity becomes free in the bay storage (4), are re-stored separately in the bay storage after depalletizing.

## Revendications

1. Procédé de stockage et de préparation de commandes d'articles (2) sous la forme d'articles individuels et/ou d'unités de conditionnement dans un système de stockage (1) composé de
- un entrepôt de rayonnages de palettes (3) pour le stockage d'articles livrés sur des supports de chargement d'entrée de marchandises,
- un dispositif (8) de dépalettisation, d'individualisation et de déplacement d'articles des supports de chargement d'entrée aux supports de chargement de transport (7),
- un entrepôt de rayonnages (4) pour le stockage d'articles individualisés sous la forme de tampons intermédiaires avant la préparation de commandes,
- au moins une station de préparation de commandes (6) dans laquelle des articles sont chargés sur un support de chargement cible (30), et
- un système technique de transport (19) pour le transport d'articles individualisés de l'entrepôt de rayonnages et vers l'entrepôt de rayonnages jusqu'à la station de préparation de commandes, les supports de chargement de transport (7) étant utilisés pour le transport d'articles individualisés sur le système technique de transport,
**caractérisé en ce que**
- les articles individualisés (2) sont stockés dans l'entrepôt de rayonnages (4) sans support de chargement de transport (7).

2. Système de stockage (1) pour le stockage et la préparation de commandes d'articles (2) sous la forme d'articles individuels et/ou d'unités de conditionnement permettant la mise en oeuvre du procédé selon la revendication 1, avec
- des supports de chargement de transport (7),
- un entrepôt de rayonnages de palettes (3) pour le stockage d'articles livrés sur des supports de chargement d'entrée de marchandises,
- un dispositif (8) de dépalettisation, d'individualisation et de déplacement d'articles des supports de chargement d'entrée aux supports de chargement de transport (7),
- un entrepôt de rayonnages (4) pour le stockage d'articles individualisés sous la forme de tampons intermédiaires avant la préparation de commandes,
- au moins une station de préparation de commandes (6) dans laquelle des articles sont chargés sur un support de chargement cible (30), et
- un système technique de transport (19) pour le transport d'articles individualisés, sur des supports de chargement de transport (7), vers l'entrepôt de rayonnages (4) et depuis l'entrepôt de rayonnages jusqu'à la station de préparation de commandes (6),
**caractérisé en ce que**
un profilage de côté supérieur (11) des supports de chargement de transport (7) est prévu sous la forme de rainures droites ouvertes sur le dessus,
le dispositif (8) de dépalettisation, d'individualisation et de déplacement d'articles (2) des supports de chargement d'entrée aux supports de chargement de transport (7) comporte un dispositif de déplacement (8a) doté d'un système de réception de chargement (10) déplaçable en hauteur dont les dents parallèles peuvent d'une part prendre des articles individualisés dans une position supérieure (P) et peuvent d'autre part être amenées dans le profilage de côté supérieur (11) d'un support de chargement de transport (7) vide positionné amené dans une position inférieure, un article déplacé vers le bas sur les dents pouvant être placé sur le support de chargement de transport positionné et le support de chargement de transport pouvant être évacué avec l'article en direction de l'entrepôt de rayonnages (4),
l'entrepôt de rayonnages comportant des fonds de compartiment profilés (13) possède un appareil de commande d'étagère (14) mobile doté d'un moyen de réception de chargement (15) déplaçable en hauteur pouvant être sorti et/ou télescopé dont les dents (16) mobiles peuvent être amenées d'une part dans les fonds de compartiment (13) profilés pour rentrer et sortir des articles individualisés (2) dans l'entrepôt de rayonnages (4) et hors de celui-ci et d'autre part dans le profilage de côté supérieur (11) d'un support de chargement de transport positionné amené, pour le transfert des articles individualisés (2) du support de chargement de transport (7) au moyen de réception de chargement (15) ou inversement du moyen de réception de chargement au support de chargement de transport.

3. Système de stockage selon la revendication 2,
**caractérisé en ce que**
le support de chargement de transport (7) prend une forme plate et sans passages traversants.

4. Système de stockage selon la revendication 2 ou 3,
**caractérisé en ce que**
le support de chargement de transport (7) possède une bordure périphérique supérieure (12).

5. Système de stockage selon l'une quelconque des revendications 2 à 4,
**caractérisé en ce que**
le moyen de réception de chargement (15) de l'appareil de commande d'étagère comporte des dents (16) pouvant être sorties des deux côtés du moyen de réception de chargement.

6. Système de stockage selon l'une quelconque des revendications 2 à 5,
**caractérisé en ce que**
l'article (2) peut être placé dans une grande proximité latérale par rapport à un autre article sur le fond de compartiment (13) profilé de l'entrepôt d'étagères (4), seul un groupe de dents (16) pouvant être sorti pour un moyen de réception de chargement (15) en fonction de la largeur d'un article (2) à faire entrer ou sortir.

7. Système de stockage selon l'une quelconque des revendications 2 à 6,
**caractérisé en ce que**
un système technique de transport de palettes (20) servant au transport d'articles sur des palettes à destination et en provenance de l'entrepôt de rayonnages de palettes et un système technique de transport de support de chargement de transport (19) servant au transport d'articles individualisés (2) sur les supports de chargement de transport (7) ainsi que de supports de chargement de transport vides sont prévus.

8. Système de stockage selon la revendication 7,
**caractérisé en ce que**
le système technique de transport de palettes (20) et/ou le système technique de transport de support de chargement de transport (19) sont de préférence des systèmes de transport à rouleaux ou à chaînes capables de faire barrage.

9. Système de stockage selon l'une quelconque des revendications 2 à 8,
**caractérisé par**
une station de préparation de commandes (6) servant à la préparation de commandes d'articles d'une palette et d'articles individualisés (2) de supports de chargement de transport (7) à un support de chargement cible (30) correspondant respectivement à un ordre de préparation de commandes.

10. Système de stockage selon la revendication 9,
**caractérisé en ce que**
le support de chargement cible (30) est un support de chargement d'expédition amené d'un ordre de préparation de commandes correspondant pouvant être transporté jusque dans la zone de sortie des marchandises (18) après un chargement dans la station de préparation de commandes (6).

11. Système de stockage selon l'une quelconque des revendications 2 à 10,
**caractérisé en ce que**
un dispositif de tri (32) servant à mettre en place une séquence de palettes et de supports de chargement de transport est prévu pour réaliser la mise à disposition séquencée d'articles (2) dans la station de préparation de commandes (6).

12. Système de stockage selon l'une quelconque des revendications 2 à 11,
**caractérisé par**
un entrepôt de rayonnages de palettes (4) connecté en parallèle de l'entrepôt de rayonnages et placé en amont de la station de préparation de commandes (6), hors duquel les articles peuvent être sortis sur des palettes et amenés jusqu'à la station de préparation de commandes.

13. Système de stockage selon l'une quelconque des revendications 2 à 12,
**caractérisé par**
une station de prise de décision (5) permettant de prendre une décision (E) pour décider si les articles identifiés amenés sur les supports de chargement d'entrée doivent être stockés dans l'entrepôt de rayonnages de palettes (3) ou dans l'entrepôt de rayonnages (4).

14. Système de stockage selon la revendication 13,
**caractérisé en ce que**
le critère de décision (E) est la fréquence de manutention de l'article (2) préparé et le stock existant correspondant audit article dans l'entrepôt de rayonnages (4), les articles (2) destinés à l'entrepôt de rayonnages étant temporairement stockés sur des palettes dans l'entrepôt de rayonnages de palettes (3) lorsque la capacité de remplissage maximale de l'entrepôt d'étagères (4) est atteinte avant d'être transportés individuellement dans l'entrepôt de rayonnages après libération d'une certaine capacité de stockage dans l'entrepôt de rayonnages (4) après la dépalettisation.
